(19) Europäisches Patentamt

European Patent Office

Office européen des brevets

(11) **EP 1 385 031 A2**

(12) **EUROPEAN PATENT APPLICATION**

(43) Date of publication:
**28.01.2004 Bulletin 2004/05**

(51) Int Cl.7: **G02B 6/293**

(21) Application number: **03254464.5**

(22) Date of filing: **16.07.2003**

| | |
|---|---|
| (84) Designated Contracting States:<br>**AT BE BG CH CY CZ DE DK EE ES FI FR GB GR<br>HU IE IT LI LU MC NL PT RO SE SI SK TR**<br>Designated Extension States:<br>**AL LT LV MK** | • **FUJITSU LIMITED<br>Kawasaki-shi, Kanagawa 211-8588 (JP)** |
| (30) Priority: **24.07.2002 JP 2002215263** | (72) Inventor: **Aritake, Hirokazu c/oFujitsu Limited<br>Kawasaki-shi, Kanagawa 211-8588 (JP)** |
| (71) Applicants:<br>• **Fujitsu Media Devices Limited<br>Yokohama-shi, Kanagawa 222-0033 (JP)** | (74) Representative: **Hitching, Peter Matthew et al<br>Haseltine Lake,<br>Imperial House,<br>15-19 Kingsway<br>London WC2B 6UD (GB)** |

(54) **Wavelength filter, variable wavelength filter, and optical device**

(57)   A wavelength filter includes lattice structures (12) that are arranged at predetermined intervals in the direction of an optical axis. Each of the lattice structures has regions (12a,12b) of two different refractive indices (nH,nL) that are alternately arranged in a direction perpendicular to the optical axis.

# Fig. 4

▥:HIGH REFRACTIVE INDEX REGION 12a
▦:LOW REFRACTIVE INDEX REGION 12b

## Description

The present invention generally relates to a wavelength filter, a variable wavelength filter, and an optical device that includes the wavelength filter or the variable wavelength filter, and more particularly, to a reflection wavelength filter, a variable wavelength filter, and an optical device that includes the wavelength filter or the variable wavelength filter.

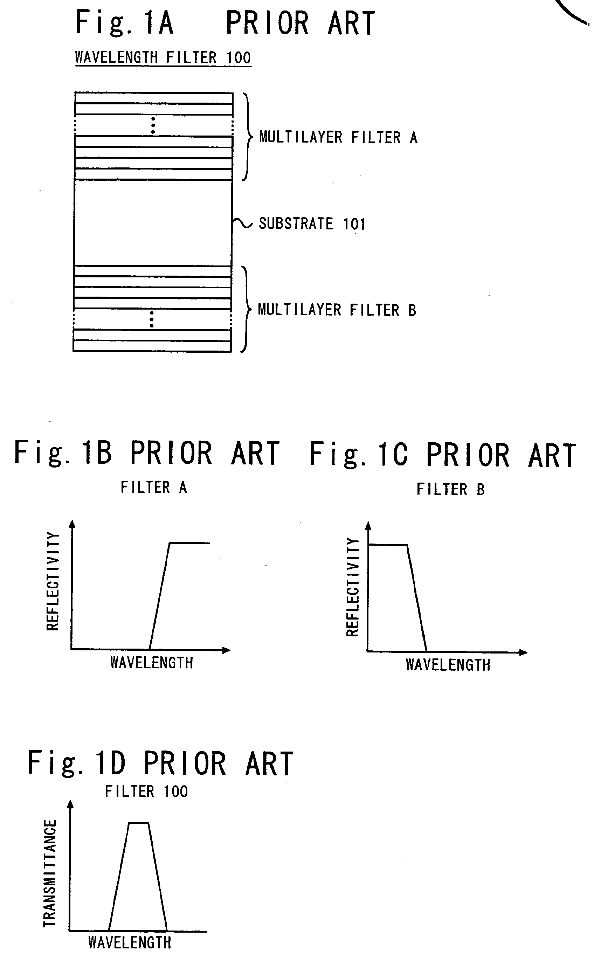

Figs. 1A through 1D illustrate a conventional wavelength filter that will be hereinafter referred to as prior art 1. The wavelength filter of prior art 1 is an optical device that includes dielectric multilayer filters. To achieve a higher wavelength selectivity, it is necessary to employ a large number of layers in the wavelength filter. To do so, however, high production costs are required.

Also, the wavelength filter of prior art 1 has a fixed reflection wavelength range. To vary the reflection wavelength range, the rotation with respect to the optical axis of the wavelength filter needs to be varied using a mechanical structure. Therefore, the optical axis of the light incident on the wavelength filter needs to be varied using a mechanical structure.

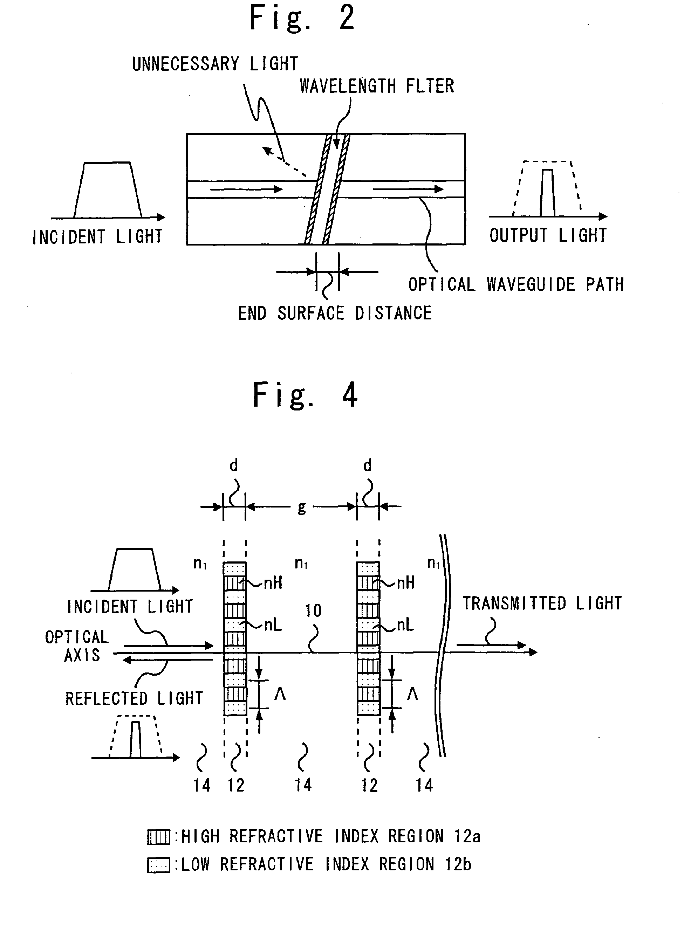

Furthermore, the wavelength filter of prior art 1 is a transmission-type optical device. To apply this wavelength filter to optical communications, it is necessary to physically cut the optical waveguide path, which is the transmitting part, as shown in Fig. 2. In a case where the optical waveguide path is cut to accommodate a wavelength filter, as shown in Fig. 2, the light transmission loss becomes greater. To reduce the light transmission loss, the wavelength filter should be formed by a reflection optical device that reflects a specific wavelength in narrow bands. However, this method has not been established in the prior art.

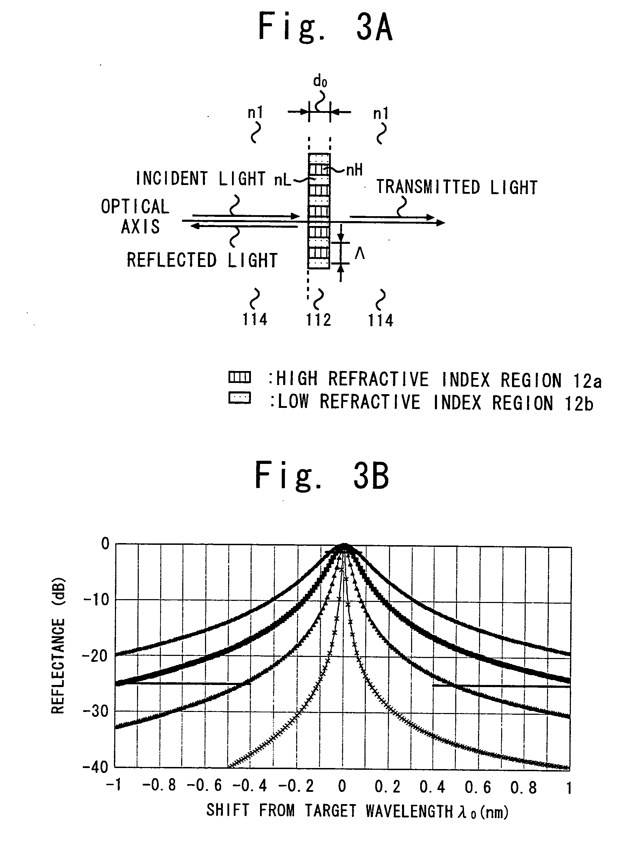

Magnusson, et al. have disclosed reflection wavelength filters each having a minute lattice structure on a plane perpendicularly crossing the optical axis so as to cause reflections in narrow wavelength bands (Applied Physics Letters, Vol. 61, pp. 1022-1024, and United States Patent Nos. 5,216,680 and 5,598,300). This structure is shown in Fig. 3A, and will be hereinafter referred to as prior art 2. Also, Fig. 3B shows an example of reflection characteristics that can be typically obtained by a calculation utilizing RCWA (Rigorous Coupled-Wave Analysis) performed on the wavelength filter of prior art 2. In Fig. 3B, the ordinate axis indicates the reflection characteristics on a logarithmic scale.

As is apparent from the reflection characteristics shown in Fig. 3B, however, the reflection wavelength filter of prior art 2 has a problem that a large enough reflection to cover a desired frequency band fb cannot be secured, because the reflectivity greatly decreases with a small change in the wavelength. For this reason, it has been difficult to employ the wavelength filter of prior art 2 for communications.

It is therefore desirable to provide a wavelength filter and an optical device including the wavelength filter in which the above disadvantage is eliminated.

It is also desirable to provide a wavelength filter that reflects light in a frequency band that is wide enough for communications, and an optical device that includes the wavelength filter.

It is also desirable to provide a variable wavelength filter that reflects light in a frequency band wide enough for communications and has variable wavelength selectivity, and an optical device that includes the variable wavelength filter.

It is also desirable to provide an optical device that can attenuate reflectivity outside a desired frequency band for the use of communications.

According to one embodiment of the present invention there is provided a wavelength filter comprising a plurality of lattice structures that are arranged at predetermined intervals in the direction of an optical axis, each of the lattice structures having regions of two different refractive indices that are alternately arranged.

According to another embodiment of the present invention there is provided a variable wavelength filter comprising a plurality of lattice structures that are arranged at predetermined intervals in the direction of an optical axis, each of the lattice structures having regions of two different substances that are alternately arranged, and at least one of the substances being an electrooptical material.

According to another embodiment of the present invention there is provided an optical device comprising one or more wavelength filters that are formed on a single substrate, each of the wavelength filters including a plurality of lattice structures that are arranged at predetermined intervals in the direction of an optical axis, and each of the lattice structures having regions of two different refractive indices that are alternately arranged.

According to another embodiment of the present invention there is provided an optical device comprising one or more variable wavelength filters that are formed on a single substrate, each of the variable wavelength filters including a plurality of lattice structures that are arranged at predetermined intervals in the direction of an optical axis, each of the lattice structures having regions of two different substances that are alternately arranged, and at least one of the substances being an electrooptical material.

Reference will now be made, by way of example, to the accompanying drawings, in which:

Figs. 1A through 1D illustrate the structure and characteristics of a wavelength filter in accordance with prior art 1;

Fig. 2 illustrates the structure of an optical device that includes the wavelength filter in accordance with prior art 1;

Fig. 3A illustrates the structure of a wavelength filter in accordance with prior art 2;

Fig. 3B is a graph showing an example of reflection characteristics that can be typically obtained by a calculation utilizing RCWA performed on the wavelength filter shown in Fig. 3A;

Fig. 4 schematically illustrates the structure of a wavelength filter in accordance with a first embodiment of the present invention;

Fig. 5A illustrates the structure of a specific example of the wavelength filter in accordance with the first embodiment;

Fig. 5B is a graph showing an example of reflection characteristics that can be typically obtained by a calculation utilizing RCWA performed on the wavelength filter of Fig. 5A;

Fig. 6 illustrates an example structure of a wavelength filter device that employs the wavelength filter of Fig. 5A;

Figs. 7A through 7E illustrate the first half of a production process of the wavelength filter device of Fig. 6;

Figs. 8A through 8E illustrate the second half of the production process of the wavelength filter device of Fig. 6;

Fig. 9A illustrates the structure of a wavelength filter in accordance with a second embodiment of the present invention;

Fig. 9B is a graph showing an example of reflection characteristics that can be typically obtained by a calculation utilizing RCWA performed on the wavelength filter of Fig. 9A;

Fig. 10 illustrates an example structure of a wavelength filter device in accordance with a third embodiment of the present invention;

Fig. 11 is a graph showing an example of reflection characteristics that can be typically obtained by a calculation utilizing RCWA performed on the wavelength filter device of Fig. 10;

Fig. 12 illustrates an example structure of a wavelength filter device in accordance with a fourth embodiment of the present invention;

Fig. 13 is a graph showing an example of reflection characteristics that can be typically obtained by a calculation utilizing RCWA performed on the wavelength filter device of Fig. 12;

Fig. 14 illustrates the structure of a variable wavelength filter in accordance with a fifth embodiment of the present invention;

Fig. 15 illustrates an example structure of a variable wavelength filter device in accordance with a sixth embodiment of the present invention;

Fig. 16 illustrates the structure of a variable wavelength filter in accordance with a seventh embodiment of the present invention; and

Fig. 17 illustrates the structure of a variable wavelength filter device in accordance with an eighth embodiment of the present invention.

The following is a description of preferred embodiments of the present invention, with reference to the accompanying drawings.

(First Embodiment)

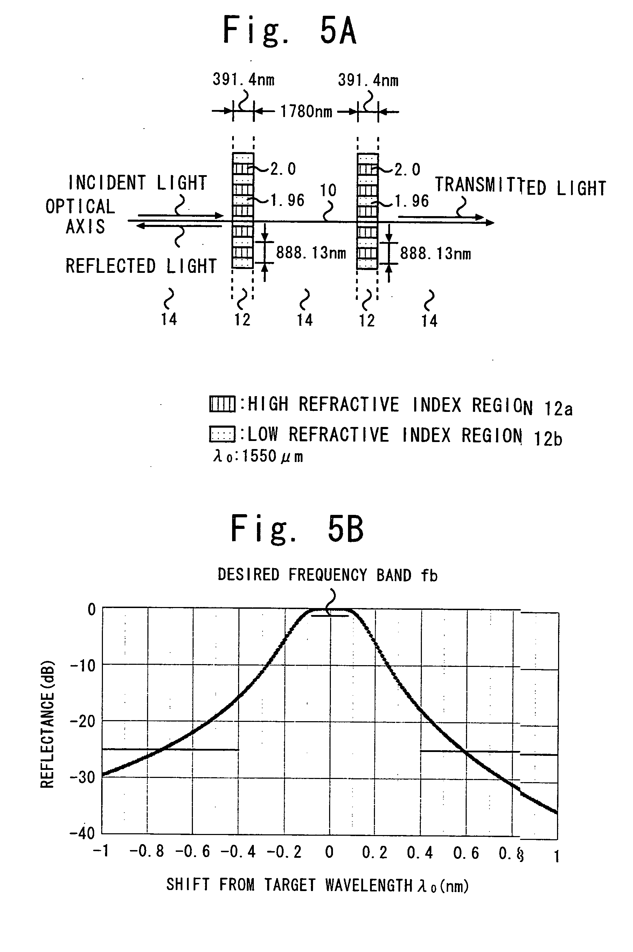

Fig. 4 is a schematic view of a wavelength filter in accordance with a first embodiment of the present invention. As shown in Fig. 4, the wavelength filter 1 of this embodiment includes two or more lattice filters 12 arranged at predetermined intervals in the direction of light (hereinafter referred to as the optical axis direction). The predetermined intervals may be uniform or varied.

Each of the lattice filters 12 has a lattice structure in which materials of different refractive indices (high-refractive-index regions 12a and low-refractive-index regions 12b) are alternately arranged in the direction perpendicular to the optical axis 10. In this description, nH represents the refractive index of each high-refractive-index region 12a, and nL represents the refractive index of each low-refractive-index region 12b (nL<nH).

The average value $n_{ave}$ of the refractive indexes nH and nL of the high-refractive-index regions 12a and the low-refractive-index regions 12b is higher than the refractive index $n_1$ of the optical waveguide path 14, and the refractive index nL is equal to or higher than the refractive index $n_1$ of the optical waveguide path 14. Further, the pitch among the high-refractive-index regions 12a and the low-refractive-index regions 12b (the pitch will be hereinafter referred to as the pitch length A) is shorter than the wavelength to be reflected (this wavelength will be hereinafter referred to as the target wavelength $\lambda_0$). Here, the average refractive index $n_{ave}$ is varied with the polarization of light to be used.

Each of the lattice filters 12 has a predetermined thickness d in the direction of the optical axis. The value of the thickness d should satisfy the following equation (1) that involves the average value $n_{ave}$ of the refractive indices of the high-refractive-index regions 12a and the low-refractive-index regions 12b, and the target wavelength $\lambda_0$.

$$n_{ave} \cdot d = \lambda_0/2 \qquad (1)$$

Meanwhile, the value of the distance between each two lattice filters 12 arranged on the optical axis (this distances will be hereinafter referred to as the gap g) should satisfy the following equation (2).

$$g = g_0 + N \cdot (\lambda_0/n_1) \qquad (2)$$

wherein $n_1$ represents the refractive index of the material that forms the medium (the optical waveguide path 14) interposed between each two lattice filters 12, $\lambda_0$ represents the target wavelength, $g_0$ represents the shortest distance among the gaps g that causes reflections in this embodiment, and N represents a positive integer. It is to be noted that the value obtained by this equation is merely used as a yardstick, and that a margin of approximately 10% is allowed in practice.

With the above-described structure, the wavelength filter 1 of this embodiment can achieve an improved wavelength selectivity. In short, the wavelength filter 1 can reflect only the neighborhood of the desired target wavelength $\lambda_0$ (i.e., filtering). Here, the optical waveguide path 14 is directly connected to the lattice filters 12, and may be formed by optical fibers, for example. In such a case, the same effects as the above can be obtained.

In the following, a more specific example of the wavelength filter 1 in accordance with this embodiment will be described. The specific example wavelength filter will be referred to as the wavelength filter 1a.

Fig. 5A is a sectional view of an example structure formed along the optical axis of the wavelength filter 1a having two lattice filters 12. Fig. 5B is a graph showing the reflection characteristics that were obtained by a calculation utilizing RCWA performed on the example structure shown in Fig. 5A.

In Fig. 5A, the target wavelength $\lambda_0$ is 1550 μm. The refractive index $n_1$ of the optical waveguide path 14 is 1.52, the refractive index nH of the high-refractive-index regions 12a is 2.0, and the refractive index nL of the low-refractive-index regions 12b is 1.96. The thickness d of each of the lattice filters 12 is 391.4 nm, the pitch length A among the high-refractive-index regions 12a and the low-refractive-index region 12b is 888.13 nm, and the gap g is 1780 nm.

As is apparent from Fig. 5B, the wavelength filter 1a exhibits improved reflection characteristics in the neighborhood of the target wavelength $\lambda_0$. In other words, this specific example realizes the reflection wavelength filter 1a that can surely reflect. a desired frequency band fb having a predetermined width from the target wavelength $\lambda_0$. Here, the desired frequency band fb is a specific wavelength band normally required in optical communications.

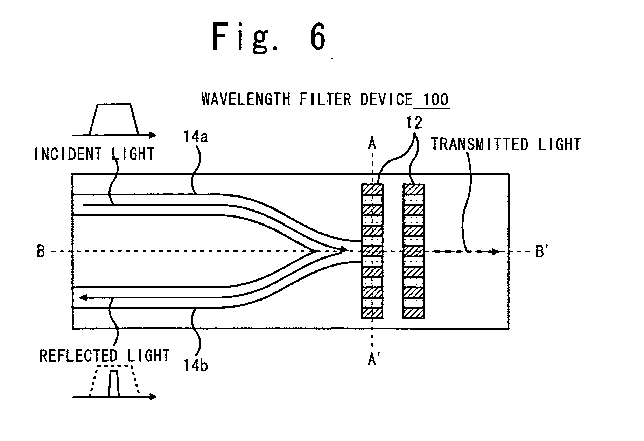

Fig. 6 illustrates an example of an optical device (a wavelength filter device 100) in which the wavelength filter 1a and the optical waveguide path 14 are formed on the same substrate. In the wavelength filter device 100 shown in Fig. 6, the incident light introduced through an optical waveguide guide path 14a is reflected according to the reflection characteristics of the wavelength filter 1a having the two lattice filters 12. The reflected light is then outputted through an optical waveguide path 14b. The transmitted light that has been transmitted through the two lattice filters 12 is either absorbed by the wavelength filter device 100 or outputted.

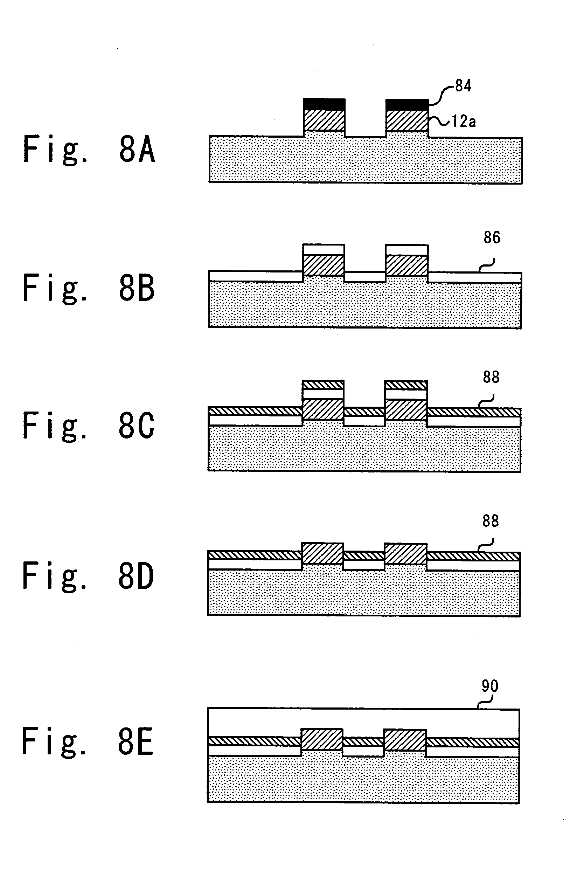

Referring now to Figs. 7A through 7E and Figs. 8A through 8E, the production process of the wavelength filter device 100 shown in Fig. 6 will be described in detail. Figs. 7A through 7D are sectional views of the structure of Fig. 6, taken along the line A-A'. Fig. 7E and Figs. 8A through 8E are sectional views of the structure of Fig. 6, taken along the line B-B'.

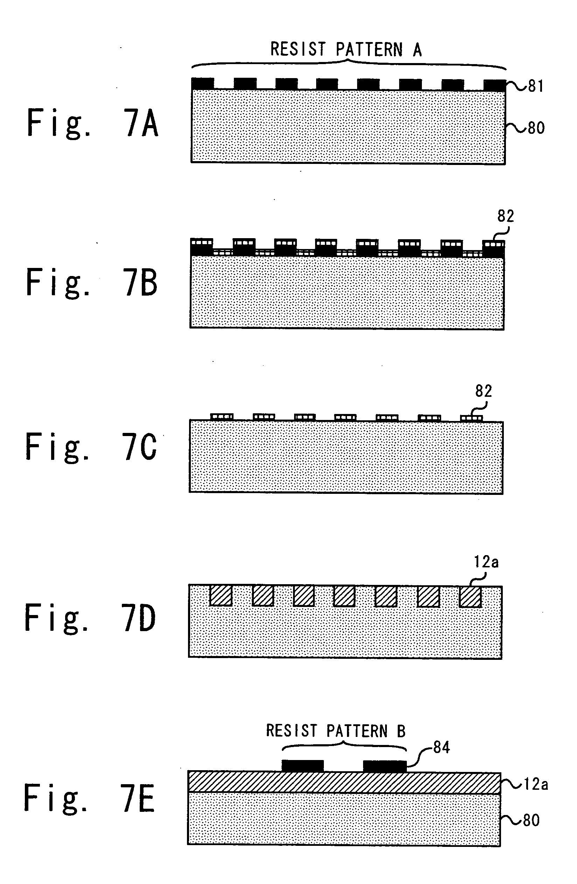

In this production process, a layer of resist 81 is first deposited on an LN(LiTaO$_3$) substrate 80, and is then exposed through a pattern for forming the high-refractive-index regions 12a, as shown in Fig. 7A. Next, Ti is vapor-deposited on the patterned surface so as to form a Ti film 82, as shown in Fig. 7B. The remaining resist 81 is then removed, and liftoff is performed on the Ti film 82 vapor-deposited on the resist 81, as shown in Fig. 7C. Annealing is then performed on the remaining parts of the Ti film 82, so as to diffuse the deposited Ti, as shown in Fig. 7D. Through these procedures, the high-refractive-index regions 12a are formed, and the pattern of the high-refractive-index regions 12a and the low-refractive-index regions 12b is established. Here, LN is the material for the low-refractive-index regions 12b, and LN diffused with Ti is the material for the high-refractive-index regions 12a.

After establishing the striped pattern, a layer of resist 84 is deposited on the surface and is then exposed through a pattern for forming the lattice filters 12, as shown in Fig. 7E. Etching is then performed, using RIE (reactive Ion Etching) or ion million, on the parts from which the resist 84 has been removed, as shown in Fig. 8A.

The remaining parts of the resist 84 are then removed, and a SiO$_2$ film 86 is deposited on the surface by a sputtering method or the like, as shown in Fig. 8B. Further, a SiO$_2$-GeO$_2$ film 88 is deposited on the SiO$_2$ film 86, as shown in Fig. 8C. After that, a resist is deposited on the surface covered with the SiO$_2$-GeO$_2$ film 88 and is exposed through a pattern for forming the optical waveguide path 14, followed by etching on the areas from which the resist has been removed, as shown in Fig. 8D. A SiO$_2$ film 90 is then deposited on the entire surface on which the etching has been performed, as shown in Fig. 8E. Through these procedures, the wavelength filter device 100 shown in Fig. 6 is produced. Here, SiO$_2$-GeO$_2$ is the material for the optical waveguide path 14.

In the above described manner, an optical device that includes the wavelength filter 1 of this embodiment can be produced.

(Second Embodiment)

As a second embodiment of the present invention, a case where the wavelength filter 1 of the first embodiment is formed by three lattice filters 12 will be described in detail. The wavelength filter of this embodiment will be hereinafter referred to as the wavelength filter 1b.

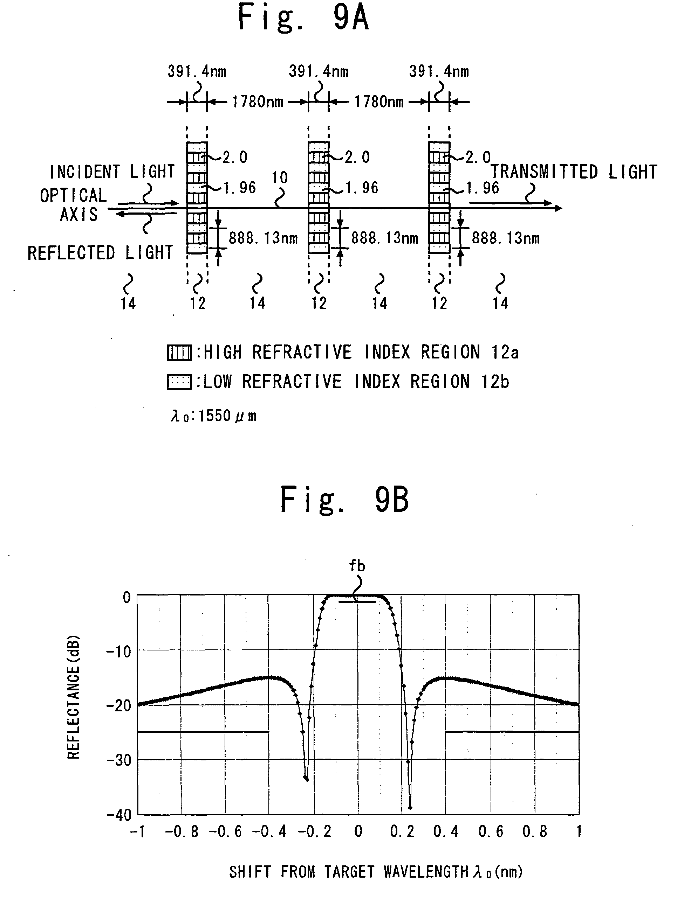

Fig. 9A is a sectional view of an example structure formed along the optical axis 10 of the wavelength filter 1b having the three lattice filters 12. Fig. 9B is a graph showing the reflection characteristics that were obtained by a calculation utilizing RCWA performed on the example structure shown in Fig. 9A.

In Fig. 9A, the target wavelength $\lambda_0$ is 1550 $\mu$m, which is the same as that in the first embodiment. The refractive index $n_1$ of the optical waveguide path 14 is 1.52, the refractive index nH of the high-refractive-index regions 12a is 2.0, and the refractive index nL of the low-refractive-index regions 12b is 1.96, which are also the same as those in the first embodiment. The thickness d of each of the lattice filters 12 is 391.4 nm, the pitch length A among the high-refractive-index regions 12a and the low-refractive-index regions 12b is 888.13 nm, and the gap g is 1780 nm, which are also the same as those in the first embodiment.

As shown in Fig. 9B, the three lattice filters 12 sharply emphasize the boundaries between the reflection range and the attenuation range. Accordingly, the wavelength selectivity for the desired frequency band fb can be further improved. Here, the other parts of the structure of this embodiment are the same as those of the first embodiment, and therefore, explanation of them is omitted in this description.

(Third Embodiment)

Although the optical device (the wavelength filter device 100) of the first embodiment includes only one wavelength filter 1a, two or more wavelength filters may be employed in an optical device. In the following, a case where two wavelength filters are employed will be described as a third embodiment of the present invention.

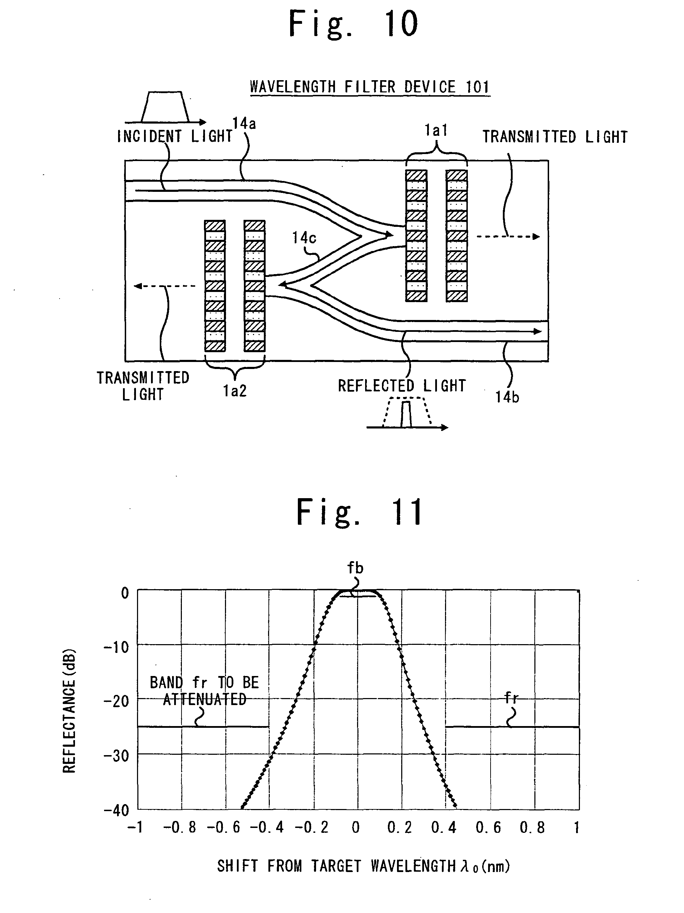

Fig. 10 illustrates a wavelength filter device 101 in accordance with this embodiment. In the wavelength filter device 101, the incident light introduced through an optical waveguide path 14a is reflected into an optical waveguide path 14c, according to the reflection characteristics of a first-stage wavelength filter 1a1. This wavelength filter 1a1 includes the two lattice filters 2 of the first embodiment. The transmitted light that has been transmitted through the first-stage wavelength filter 1a1 is either absorbed by the wavelength filter device 101 or outputted.

The light reflected into the optical waveguide path 14c is next reflected according to the reflection characteristics of a second-stage wavelength filter 1a2. The reflected light is then outputted through an optical waveguide path 14b. The wavelength filter 1a2 includes the two lattice filters 12 of the first embodiment. The transmitted light that has been transmitted through the second-stage wavelength filter 1a2 is either absorbed by the wavelength filter device 101 or outputted.

Fig. 11 is a graph showing the reflection characteristics obtained by a calculation utilizing RCWA performed on the wavelength filter device 101 of this embodiment. As is apparent from Fig. 11, two or more wavelength filters 1a are employed to sharply emphasize the boundaries between the reflection range and the attenuation range. Also, the wavelengths outside the reflection range are further attenuated, so that the wavelength selectivity for the desired frequency band fb is improved, and that the attenuation rate in the frequency band to be attenuated is increased. Accordingly, the specific wavelength band normally required in optical communications is surely reflected, and the unnecessary frequency bands can be sufficiently attenuated. The other parts of the structure of this embodiment are the same as those of the first embodiment, and therefore, explanation of them is omitted in this description.

(Fourth Embodiment)

The wavelength filters 1a1 and 1a2 employed in the third embodiment may be replaced with wavelength filters 1b1 and 1b2 each including the three lattice filters 12 of the second embodiment. In the following, such a structure will be described as a fourth embodiment of the present invention.

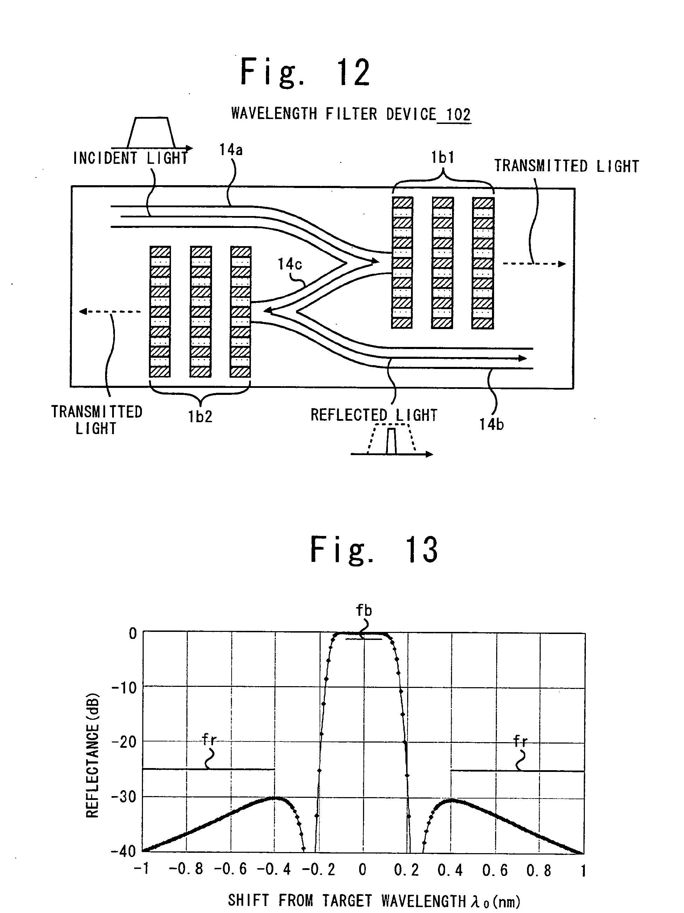

Fig. 12 illustrates a wavelength filter device 102 of this embodiment. In the wavelength filter device 102, the incident light introduced through the optical waveguide path 14a is first reflected into the optical waveguide path 14c, according to the reflection characteristics of the first-stage wavelength filter 1b1. The wavelength filter 1b1 includes the three lattice filters 12 of the second embodiment. The transmitted light that has been transmitted through the first-stage wavelength filter 1b1 is either absorbed by the wavelength filter device 102 or outputted.

The light reflected into the optical waveguide path 14c is next reflected according to the reflection characteristics of the second-stage wavelength filter 1b2. The reflected light is then transferred through the optical waveguide path 14b and outputted to the outside. The wavelength filter 1b2 includes the three lattice filters 12 of the second embodiment. The transmitted light that has been transmitted through the second-stage wavelength filter 1b2 is either absorbed by the wavelength filter device 102 or outputted.

Fig. 13 is a graph showing the reflection characteristics obtained by a calculation utilizing RCWA performed on the wavelength filter device 102 of this embodiment. As can be seen from Fig. 13, the two wavelength filters 1b1 and 1b2 sharply emphasize the boundaries between the reflection range and the attenuation range. Also, the wavelengths outside the reflection range are further attenuated, so that the wavelength selectivity for the desired frequency band fb is improved, and that the attenuation rate in the frequency band to be attenuated is increased.

Accordingly, the specific wavelength band normally required in optical communications is surely reflected, and the unnecessary frequency bands can be sufficiently attenuated. The other parts of the structure of this embodiment are the same as those of the first embodiment, and therefore, explanation of them is omitted in this description.

(Fifth Embodiment)

The lattice filters 12 of each of the foregoing embodiments may be made of a material having an electrooptical effect, to thereby form a variable wavelength filter 2. In the following, this structure will be described as a fifth embodiment of the present invention.

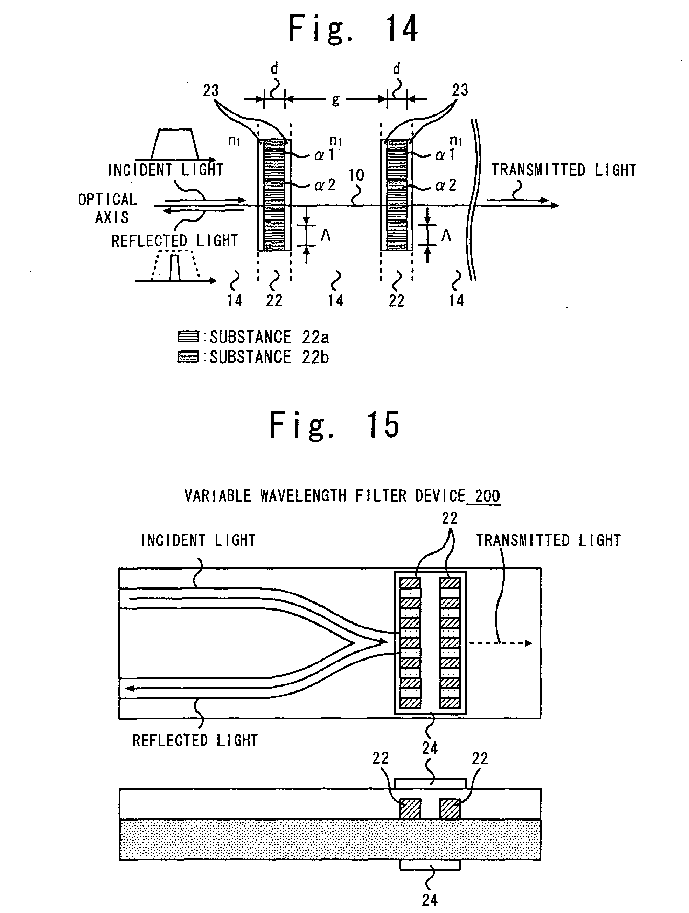

Fig. 14 illustrates the structure of the variable wavelength filter 2 of this embodiment. In this embodiment, the variable wavelength filter 2 includes two lattice filters 22. However, the number of lattice filters 12 is not limited to two, but may be three or greater.

As can be seen from Fig. 14, each of the lattice filters 22 has substances 22a and 22b alternately arranged in the direction perpendicular to the optical axis 10. In this embodiment, $\alpha 1$ represents the electrooptical constant of the substances 22a, and $\alpha 2$ represents the electrooptical constant of the substances 22b.

Examples of the materials for the substances 22a and 22b include LN ($LiNbO_3$), LT ($LiTaO_3$), PZT (Pb ($Zr, Ti)O_3$), and PLZT ($(Pb, La) (Zr, Ti)O_3$).

Each of the lattice filters 22 also has electrodes 23 for inducing an electric field. In this embodiment, the electrodes 23 are provided on the surfaces that reflect light and on the surfaces that transmit light. With this structure, an electric field can be induced in the lattice filters 22 made of a material having an electrooptical effect. In this case, each of the electrodes 23 is made of a material that is transparent to the target wavelength $\lambda_0$, such as ITO (indium-tin oxide).

With the above structure, this embodiment achieves the same effects as each of the foregoing embodiments, and realizes the variable wavelength filter 2 that can vary the wavelength to be reflected according to the voltage to be applied to the electrodes 23. Accordingly, the wavelength selectivity can be diversified. The other parts of the structure of this embodiment are the same as those of the first embodiment, and therefore, explanation of them is omitted in this description.

(Sixth Embodiment)

Each of the electrodes 23 can have a different structure from that of the fifth embodiment. In the following, such a case will be described as a sixth embodiment of the present invention.

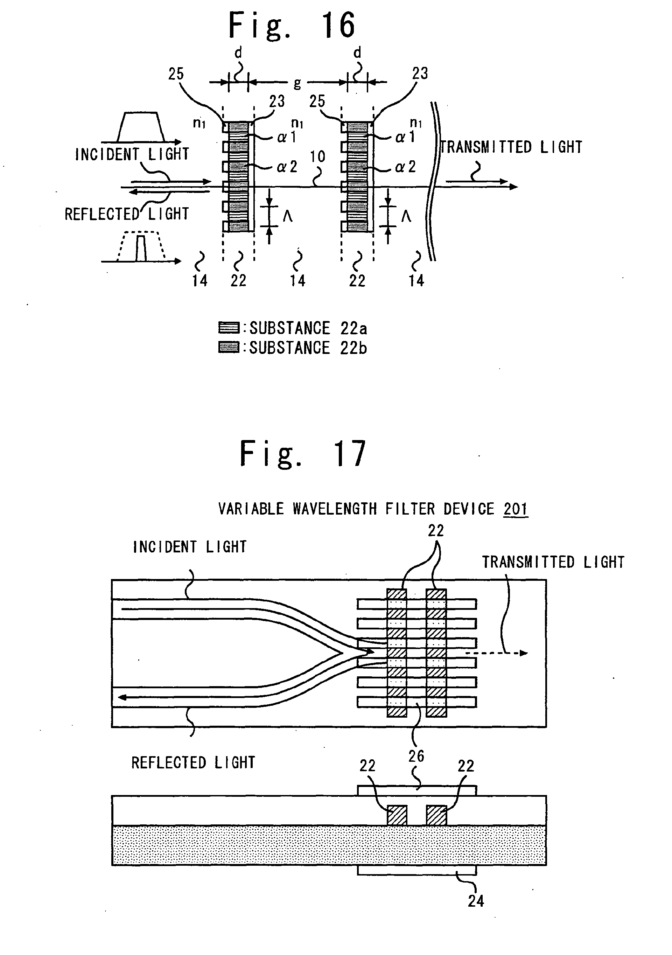

Fig. 15 illustrates an example of an optical device (a variable wavelength filter 200) using the variable wavelength filter 2. As can be seen from Fig. 15, electrodes 24 are formed on planes that do not cross the optical axis 10, and are common to the two lattice filters 22. With this structure, an electric field can be induced in the lattice filters 22 made of a material having an electrooptical effect. In this embodiment, the optical waveguide path 14 is directly connected to the lattice filters 22.

In the example shown in Fig. 15, one of the two electrodes 24 is provided on the back face of the LN substrate, opposite from the lattice filters 22. However, the arrangement of the electrodes 24 is not limited to this, but may be varied in many ways, as long as the two electrodes 24 can induce an electric field in the lattice filters 22.

With the above structure, this embodiment can achieve the same effects as those of the fifth embodiment. Also, as the electrodes 24 are common to the two lattice filters 22, the production process can be simplified. The other parts of the structure of this embodiment are the same as those of the first embodiment, and therefore, explanation of them is omitted in this description.

(Seventh Embodiment)

Although the substances 22a and 22b are both made of a material having an electrooptical effect in the fifth embodiment, it is also possible to form only the substances 22a or the substances 22b with a material having an electrooptical effect. In the following, such a case will be described as a seventh embodiment of the present invention.

Fig. 16 illustrates the structure of a variable wavelength filter 2a of this embodiment. As can be seen from Fig. 16, electrodes 25 for inducing an electric field in the substances having electrooptical effects are provided only on the light reflection sides of the substances 22b. Like the electrodes 23, the electrodes 25 are also made of a material that is transparent to the target wavelength $\lambda_0$.

With the above structure, this embodiment can provide a variable wavelength filter that avoids inducing an electric field in unnecessary substances. Accordingly, the wavelength selectivity can be further diversified. The other parts of the structure of this embodiment are the same as those of the first embodiment, and therefore, explanation of them is omitted in this description.

(Eighth Embodiment)

An eighth embodiment of the present invention is to provide a structure in which a electrode 26 for inducing an electric field in either the substances 22a or 22b is provided for both of the two lattice filters 22, as shown in Fig. 17.

With this structure, this embodiment can provide a variable wavelength filter that avoids inducing an electric field in unnecessary substances. Also, as the electrodes 24 and 26 are common to the two lattice filters 22, the production process can be simplified. The other parts of the structure of this embodiment are the same as those of the first embodiment, and therefore, explanation of them is omitted in this description.

The present invention is not limited to the specifically disclosed embodiments, and other embodiments, variations and modifications may be made without departing from the scope of the present invention.

The present application is based on Japanese Patent Application No. 2002-215263 filed on July 24, 2002, the entire disclosure of which is hereby incorporated by reference.

**Claims**

1. A wavelength filter comprising
   a plurality of lattice structures that are arranged at predetermined intervals in the direction of an optical axis,
   each of the lattice structures having regions of two different refractive indices that are alternately arranged.

2. The wavelength filter as claimed in claim 1, wherein the average refractive index of the lattice structures is higher than the refractive index of areas for transmitting light before and behind the lattice structures.

3. The wavelength filter as claimed in claim 1 or 2, wherein the regions of two different refractive indices are alternately arranged in a direction perpendicular to the optical axis.

4. The wavelength filter as claimed in any preceding claim, wherein the predetermined intervals are uniform.

5. The wavelength filter as claimed in any preceding claim, wherein the lattice structures are formed on a substrate on which an optical waveguide path is also formed.

6. The wavelength filter as claimed in any preceding claim, wherein the optical waveguide path is directly connected to the lattice structures.

7. The wavelength filter as claimed in any preceding claim, wherein the optical waveguide path includes optical fibers.

8. The wavelength filter as claimed in any preceding claim, comprising two or three of the lattice structures.

9. A variable wavelength filter comprising
   a plurality of lattice structures that are arranged at predetermined intervals in the direction of an optical axis,
   each of the lattice structures having regions of two different substances that are alternately arranged, and
   at least one of the substances being an electrooptical material.

10. The variable wavelength filter as claimed in claim 9, further comprising electrodes for inducing an electric field in the lattice structures.

11. The variable wavelength filter as claimed in claim 9 or 10, wherein the average refractive index of the lattice structures is higher than the refractive index of areas for transmitting light before and behind the lattice structures.

12. The variable wavelength filter as claimed in claim 9, 10 or 11, wherein the regions of two different substances are alternately arranged in a direction perpendicular to the optical axis.

13. The variable wavelength filter as claimed in any one of claims 9 to 12, wherein the predetermined intervals are uniform.

14. The variable wavelength filter as claimed in any one of claims 9 to 13, wherein the lattice structures are formed on a substrate on which an optical waveguide path is also formed.

15. The variable wavelength filter as claimed in any one of claims 9 to 14, wherein the optical waveguide path is directly connected to the lattice structures.

16. The variable wavelength filter as claimed in any one of claims 9 to 15, wherein the electrooptical material includes at least one of $LiNbO_3$, $LiTaO_3$, $Pb(Zr, Ti)O_3$, and $(Pb, La)(Zr, Ti)O_3$.

17. The variable wavelength filter as claimed in claim 10, wherein the electrodes are formed on at least either the light reflection faces or the light transmission faces of the lattice structures.

18. The variable wavelength filter as claimed in claim 17, wherein the electrodes are transparent electrodes.

19. The variable wavelength filter as claimed in claim 10, 17 or 18, wherein the electrodes are common to two or more of the lattice structures.

20. An optical device comprising one or more wavelength filters, each as claimed in any one of claims 1 to 8, or one or more variable wavelength filters, each as claimed in any one of claims 9 to 19, formed on a single substrate.

21. An optical device as claimed in claim 20, having two or more such wavelength filters or two or more such variable wavelength filters formed on said single substrate, wherein the distance between the wavelength filters is longer than each of the predetermined intervals.

# Fig. 1A    PRIOR ART

WAVELENGTH FILTER 100

MULTILAYER FILTER A

SUBSTRATE 101

MULTILAYER FILTER B

# Fig. 1B PRIOR ART    Fig. 1C PRIOR ART

FILTER A

FILTER B

REFLECTIVITY

WAVELENGTH

REFLECTIVITY

WAVELENGTH

# Fig. 1D PRIOR ART

FILTER 100

TRANSMITTANCE

WAVELENGTH

EP 1 385 031 A2

# Fig. 2

UNNECESSARY LIGHT

WAVELENGTH FLTER

INCIDENT LIGHT

OUTPUT LIGHT

OPTICAL WAVEGUIDE PATH

END SURFACE DISTANCE

# Fig. 4

INCIDENT LIGHT

OPTICAL AXIS

REFLECTED LIGHT

$n_1$  $n_1$  $n_1$

nH  nH

nL  nL

10

TRANSMITTED LIGHT

14  12  14  12  14

▦ :HIGH REFRACTIVE INDEX REGION 12a

▦ :LOW REFRACTIVE INDEX REGION 12b

10

# Fig. 3A

☐☐☐ :HIGH REFRACTIVE INDEX REGION 12a
☐☐☐ :LOW REFRACTIVE INDEX REGION 12b

# Fig. 3B

# Fig. 5A

INCIDENT LIGHT

OPTICAL AXIS

REFLECTED LIGHT

391.4nm　　　391.4nm

1780nm

2.0

1.96

10

888.13nm

2.0

1.96

888.13nm

TRANSMITTED LIGHT

14　　12　　14　　12　　14

▥ : HIGH REFRACTIVE INDEX REGION 12a

▦ : LOW REFRACTIVE INDEX REGION 12b

$\lambda_0$ : 1550 $\mu$m

# Fig. 5B

DESIRED FREQUENCY BAND fb

REFLECTANCE (dB)

SHIFT FROM TARGET WAVELENGTH $\lambda_0$ (nm)

# Fig. 6

WAVELENGTH FILTER DEVICE 100

INCIDENT LIGHT

REFLECTED LIGHT

14a

14b

A

A'

B

B'

12

TRANSMITTED LIGHT

RESIST PATTERN A

Fig. 7A

~81

~80

Fig. 7B

82

Fig. 7C

82

Fig. 7D

12a

RESIST PATTERN B

Fig. 7E

84

~12a

~80

Fig. 8A

84

12a

Fig. 8B

86

Fig. 8C

88

Fig. 8D

88

Fig. 8E

90

# Fig. 9A

$\lambda_0$:1550 $\mu$m

# Fig. 9B

# Fig. 10

WAVELENGTH FILTER DEVICE 101

INCIDENT LIGHT 14a    1a1    TRANSMITTED LIGHT

14c

TRANSMITTED LIGHT    1a2    REFLECTED LIGHT    14b

# Fig. 11

fb

BAND fr TO BE ATTENUATED    fr

REFLECTANCE (dB)

0

-10

-20

-30

-40

-1  -0.8  -0.6  -0.4  -0.2  0  0.2  0.4  0.6  0.8  1

SHIFT FROM TARGET WAVELENGTH $\lambda_0$ (nm)

# Fig. 12

WAVELENGTH FILTER DEVICE 102

INCIDENT LIGHT    14a                    1b1    TRANSMITTED LIGHT

14c

TRANSMITTED
LIGHT    1b2        REFLECTED LIGHT    14b

# Fig. 13

fb

REFLECTANCE (dB)

fr          fr

0

-10

-20

-30

-40

-1  -0.8  -0.6  -0.4  -0.2   0   0.2   0.4   0.6   0.8   1

SHIFT FROM TARGET WAVELENGTH $\lambda_0$ (nm)

# Fig. 14

☰ :SUBSTANCE 22a
▨ :SUBSTANCE 22b

# Fig. 15

VARIABLE WAVELENGTH FILTER DEVICE 200

# Fig. 16

INCIDENT LIGHT

REFLECTED LIGHT

TRANSMITTED LIGHT

```
:SUBSTANCE 22a
:SUBSTANCE 22b
```

# Fig. 17

VARIABLE WAVELENGTH FILTER DEVICE 201

INCIDENT LIGHT

TRANSMITTED LIGHT

REFLECTED LIGHT